# EUROPÄISCHE PATENTANMELDUNG

(11) **EP 0 987 724 A2**
(43) Veröffentlichungstag der Anmeldung: **22.03.2000**
(21) Anmeldenummer: 99118278.3
(22) Anmeldetag: 15.09.1999
(51) Int. Cl.: H01H 9/06, H01H 9/54

(54) **Handgeführtes Werkzeug**

(30) Priorität: 17.09.1998 DE 29816673 U
(71) Anmelder: Atlas Copco Electric Tools GmbH, 71364 Winnenden (DE)
(72) Erfinder: Siegle, Volker, 71364 Winnenden (DE)
(74) Vertreter: Riedel, Peter, Dipl.-Ing.

(57) **Zusammenfassung**

Ein handgeführtes Werkzeug mit einem elektrischen Antriebsmotor (15) ist mit einer Spannung >42 Volt betreibbar. Dieses weist einen an einem Gehäuse (2) des Antriebsmotors (15) angeordneten Handgriff (7) und ein in dem Handgriff (7) gelagerten Betätigungselement auf, das auf einen elektrischen Schalter wirkt, um den Antriebsmotor (15) mit elektrischer Energie zu versorgen. Eine Leistungselektronik ist zwischen der Spannungsquelle und dem Antriebsmotor (15) vorgesehen und der Schalter ist ein Mikroschalter (16), der mit der Leistungselektronik verbunden ist und infolge seiner Betätigung die Ausgangsleistung der Leistungselektronik bestimmt.

## Beschreibung

Die Erfindung betrifft ein handgeführtes Werkzeug mit einem elektrischen Antriebsmotor der im Oberbegriff des Anspruchs 1 angegebenen Gattung.

Es sind handgeführte Werkzeuge mit einem elektrischen Antriebsmotor bekannt, bei der die den Motor treibende Spannung aus einem Netz oder einem Akku bezogen wird. Zum Ein- bzw. Ausschalten des Antriebsmotors dient ein in einem Handgriff gelagertes Betätigungselement, das üblicherweise als Taste oder Hebel ausgebildet ist und auf einen elektrischen Schalter wirkt. Derartige Schalter benötigen einen bestimmten Bauraum, da aufgrund der zu schaltenden Leistung entsprechend groß bemessene Kontakte und Schaltwege der Kontakte erforderlich sind. Bei einer Versorgung mit Netzspannung, also üblicherweise 220 V, muß der Kontaktabstand mindestens 3 mm betragen. Aufgrund der Schalthäufigkeit entsteht eine Abnutzung der Kontakte, insbesondere durch die beim Öffnen der Schaltkontakte entstehenden Lichtbogen bzw. Abreißfunken. Bei hochbelasteten Schaltern sind sogar Maßnahmen zur Lichtbogenlöschung zu treffen, beispielsweise in Form von Kurzschlußschaltungen. Außerdem kann durch Alterungserscheinungen wie beispielsweise Ermüden der Rückstellfedern oder Verschmutzung des Schalters durch eindringende Partikel die Funktion des Schalters beeinträchtigt sein. Ein weiterer Nachteil der bekannten Anordnung besteht darin, daß bei einem Überstrom, z. B. beim Blockieren der Maschine, die Kontakte verschmelzen können, wodurch sich die Maschine nicht mehr abschalten läßt.

Der vorliegenden Erfindung liegt die Aufgabe zugrunde, ein handgeführtes Werkzeug mit einem elektrischen Antriebsmotor der gattungsgemäßen Art zu schaffen, bei dem der Schalter einen äußerst geringen Bauraum benötigt und dessen sichere Funktion ohne Abnutzungserscheinungen gewährleistet ist.

Diese Aufgabe wird durch ein handgeführtes Werkzeug mit den Merkmalen des Anspruchs 1 gelöst.

Die wesentlichen Vorteile der Erfindung sind darin zu sehen, daß der Handgriff völlig unabhängig von der Kontur des Schalters gestaltet werden kann, da wegen des geringen Bauraums der Schalter in jede Handgrifform paßt. Außerdem werden die Kontakte des Mikroschalters lediglich zur Schaltung eines Signalstromes benutzt und daher thermisch praktisch nicht belastet. Ein weiterer Vorteil besteht darin, daß nach dem Abschalten der Maschine der Motor noch immer mit der Leistungselektronik verbunden ist, so daß der Motor kontrolliert auslaufen und beispielsweise auch elektrisch gebremst werden kann.

Bezüglich der Anordnung der Leistungselektronik sind unterschiedliche Ausgestaltungen möglich, wobei sowohl eine Integration der Leistungselektronik in dem Gehäuse des Antriebsmotors als auch die Anordnung in einer separaten Box möglich ist. Im letztgenannten Fall sind der Antriebsmotor wie auch der Mikroschalter über ein mehradriges Kabel mit der Box verbunden. Die Anordnung der Leistungselektronik in einer separaten Box gestattet es, die Leistungselektronik wahlweise mit unterschiedlichen handgeführten Werkzeugen zu verbinden; außerdem wird das Gewicht des in der Hand zu führenden Werkzeugs reduziert. Zur leichten Adaption ist es zweckmäßig, daß am Gehäuse des Antriebsmotors und/oder an der Box eine Kupplung bzw. Steckverbindung vorgesehen ist.

Je nach Art des Antriebsmotors und auch der übrigen technischen Ausstattung des Werkzeugs muß das Verbindungskabel eine bestimmte Anzahl von Leitern aufweisen, wobei es als zweckmäßig angesehen wird, daß mindestens fünf Leiter, vorzugsweise jedoch sieben Leiter vorhanden sind. Zum Schutz des Antriebsmotors vor thermischer Überbeanspruchung ist ein Temperatursensor vorgesehen, der mit der Leistungselektronik und/oder dem Mikroschalter verbunden ist. Auf besonders einfache und selbstsichernde Weise umfaßt der Temperatursensor ein PTC-Element. Als zusätzliche Sicherungsfunktion ist es vorteilhaft, den Mikroschalter und/oder den Temperatursensor auf korrekten Anschluß zu überprüfen. Dies wird vorzugsweise dadurch realisiert, daß in die elektrische Leitung zum Mikroschalter und/oder dem Temperatursensor ein Widerstand bestimmter Größe geschaltet ist. Im Falle eines Kurzschluß wird von der Elektronik festgestellt, daß der vorgegebene Widerstandswert nicht erreicht ist, und im Falle einer Leitungsunterbrechung wird ein zu großer Widerstand festgestellt. In beiden Fällen wird eine Inbetriebnahme des Gerätes durch die Elektronik verhindert.

Als Betätigungselement für den Mikroschalter ist zweckmäßigerweise ein im Handgriff schwenkbar gelagerter Schalthebel vorgesehen, dessen freies Ende über die Kontur des Handgriffs hervorsteht. Ein solcher Schalthebel ist vorzugsweise ergonomisch gestaltet und benötigt für die Schaltfunktion eine geringere Betätigungskraft als dies bei herkömmlichen Schaltern der Fall ist. Um die räumliche Zuordnung von Schalthebel und Mikroschalter unabhängig zu gestalten, ist es vorteilhaft, daß der Schalthebel mit einem weiteren Hebel in Wechselwirkung steht, der auf einen Stößel des Mikroschalters wirkt. Um die Kraft, die auf den Stößel des Mikroschalters wirkt, zu begrenzen, ist es zweckmäßig, daß die beiden Hebel in Betätigungsrichtung des Schalters nach einem vorgegebenen Betätigungsweg entkoppelbar sind. Gegebenenfalls kann zwischen dem von der Bedienungsperson betätigbaren Schalthebel und dem auf den Mikroschalter wirkenden Hebel ein Übertragungsglied angeordnet sein. Zur Erzeugung einer Rückstellfunktion des Schalthebels und einer spürbaren Reaktionskraft ist eine Feder vorgesehen, die einerseits auf den Hebel wirkt und andererseits an einer Lagerfläche des Gehäuses abgestützt ist. Wegen der möglichen Entkopplung der beiden Hebel ist ein weiteres Federelement erforderlich, das an dem Hebel des Mikroschalters angelenkt ist und den Hebel im Sinne eines Schließens der Schaltkontakte im Mikroschalter belastet.

Um ein unbeabsichtigtes Betätigen des Schalthebels zu verhindern, ist ein Sicherungsmechanismus vorgesehen, der vorzugsweise ein federbelastetes Sperrglied umfaßt, das an dem Schalthebel schwenkbar gelagert ist. Dieses Sperrglied ist auf einer im Schalthebel angeordneten Schwenkachse gelagert und von einer Drehfeder selbsttätig rückstellbar. Mit einem Ende stützt sich das Sperrglied auf dem Handgriff ab. Nur bei bewußt vorgenommener Entriegelung des Sperrgliedes kann somit der Schalthebel betätigt werden und der Antriebsmotor anlaufen.

Als Antriebsmotor kommt insbesondere ein Wechselstrommotor mit einer Leistung von ca. 2500 Watt in Betracht. Dieser Motor kann als Einphasenwechselstrommotor für eine Spannung von ca. 220 - 250 Volt ausgelegt sein, besonders bevorzugt ist jedoch ein Dreiphasensynchronmotor, der sich durch ein großes Drehmoment und damit auch große Belastbarkeit auszeichnet. Zur Bereitstellung einer Dreiphasenspannung (Drehstrom) umfaßt die Leistungselektronik einen Frequenzumrichter.

Ein Ausführungsbeispiel der Erfindung ist nachstehend anhand der Zeichnung näher erläutert. In der Zeichnung zeigt:
- Fig. 1: eine perspektivische Darstellung eines handgeführtes Werkzeugs mit einer Box für die Leistungselektronik,
- Fig. 2: einen Längsschnitt durch einen Winkelschleifer mit im Handgriff integriertem Mikroschalter,
- Fig. 3: eine vergrößerte Darstellung des Schnittes durch den Handgriff gemäß Fig. 2,
- Fig. 4: einen Gerätestecker mit angeschlossenem Mikroschalter und Temperatursensor,
- Fig. 5: ein Flußdiagramm bezüglich des Ablaufs mehrerer Sicherheitsüberprüfungen.

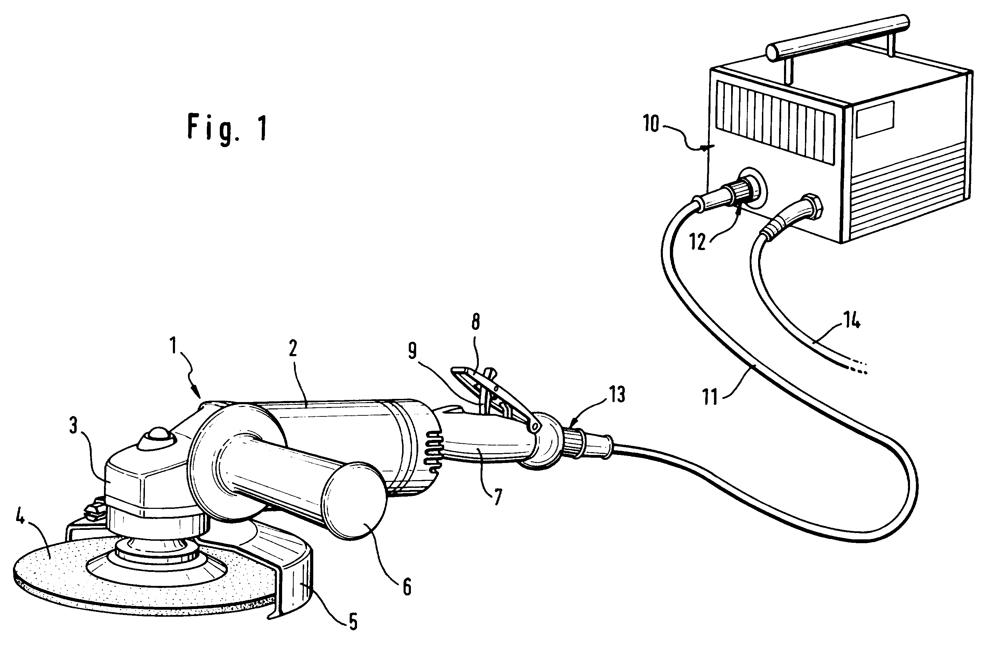

Die Fig. 1 zeigt ein handgeführtes Werkzeug 1 in Form eines Trennschleifers, das ein Gehäuse 2 mit einem darin befindlichen Antriebsmotor und ein am vorderen Ende des Gehäuses 2 angeordnetes Winkelgetriebe 3 umfaßt. An einer Ausgangswelle des Winkelgetriebes 3 ist eine Trennscheibe 4 befestigt, die zu einem Teil von einer Schutzhaube 5 überdeckt ist. An dem Gehäuse 2 ist ein vorderer Handgriff 6 sowie ein hinterer Handgriff 7 angeordnet, die zum beidhändigen Führen des Werkzeuges dienen. Am hinteren Handgriff 7 befindet sich ein Schalthebel 8, der zum Einschalten bzw. Ausschalten des Antriebsmotors dient. An dem Schalthebel 8 befindet sich ein Sperrglied 9, das ein unbeabsichtigtes Betätigen des Schalthebels 8 verhindern soll. In einer Box 10 ist die Leistungselektronik angeordnet, die in Abhängigkeit des Signalstroms von einem vom Schalthebel 8 betätigten Schalter und gegebenenfalls weiterer Parameter die dem Motor zugeführte Leistung steuert. Die Leistungselektronik in der Box 10 ist mittels eines Verbindungskabels 11 mit dem Antriebsmotor verbunden, wobei das Verbindungskabel 11 mittels Stecker/Kupplung-Verbindungen 12 und 13 lösbar an der Box 10 sowie dem hinteren Handgriff 7 des Werkzeugs 1 befestigt ist. Die Box 10 ist mit einem Kabel 14 zum Anschluß an ein Stromnetz versehen.

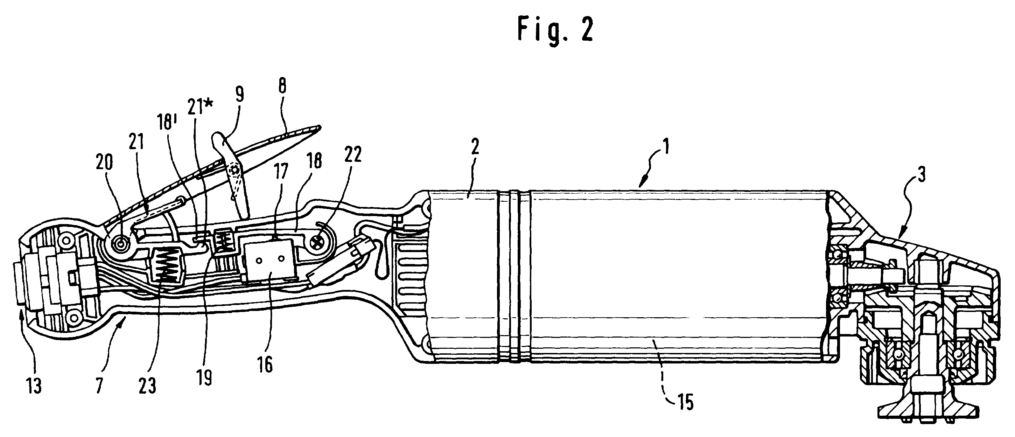

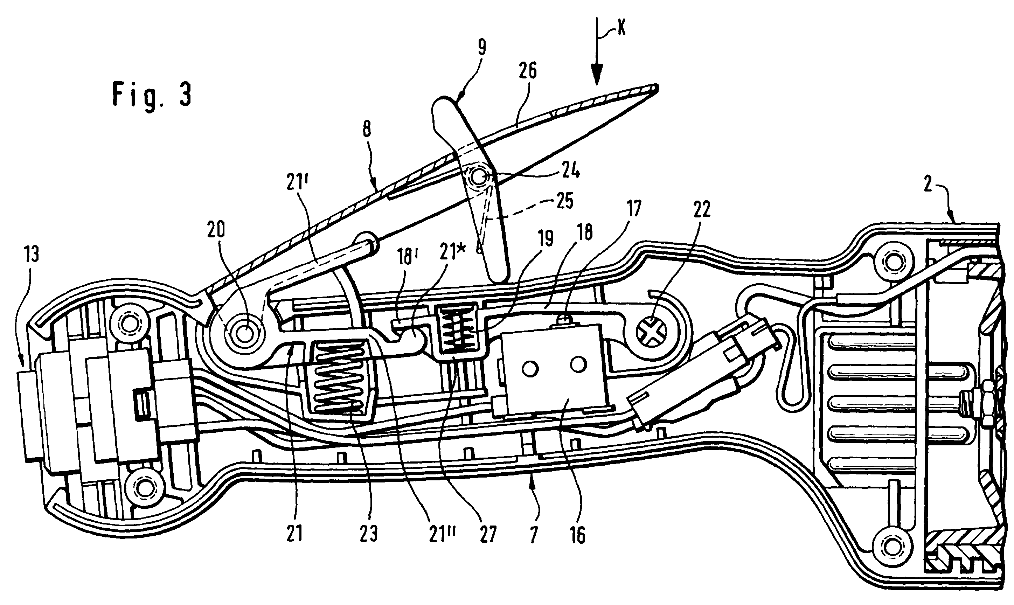

Die Fig. 2 und 3 zeigen einen Längsschnitt durch einen Winkelschleifer bzw. hinteren Handgriff 7, also ein handgeführtes Werkzeug 1, an dessen vorderem Ende des Gehäuses 2 das Winkelgetriebe 3 angeordnet ist. In dem Gehäuse 2 ist ein Antriebsmotor 15 aufgenommen, der über entsprechende Anschlüsse mit der am hinteren Ende des hinteren Handgriffs 7 vorgesehenen Stecker/Kupplungs-Vorrichtung 13 verbunden ist. In dem Handgriff 7 befindet sich ein Mikroschalter 16, dessen Stößel 17 aus dem Schaltergehäuse hervorsteht und mit einem Hebel 18 in Wechselwirkung steht. Der Hebel 18 ist mit einem Ende auf einem Lagerzapfen 22 schwenkbar gelagert und auf der gegenüberliegenden Seite des Mikroschalters 16 ist an dem Hebel 18 eine Schaltfeder 19 angelenkt.

Der Schalthebel 8 ist auf einem Lagerzapfen 20 schwenkbar gelagert, auf dem koaxial auch ein Übertragungsglied 21 angeordnet ist, das mit einem Arm 21' kraftschlüssig an dem Schalthebel 8 angreift und dessen anderer Arm 21'' mit seinem vorderen Ende 21* in Eingriff mit dem freien Hebelende 18' des Hebels 18 steht. Der Arm 21'' des Übertragungsgliedes 21 wird von einer Feder 23 belastet, die eine Reaktionskraft bei Betätigung des Schalthebels 8 erzeugt und beim Loslassen des Schalthebels 8 eine Rückstellbewegung erzeugt.

Am Schalthebel 8 befindet sich eine Schwenkachse 24 für das Sperrglied 9, das als doppelarmiger Hebel ausgebildet ist, wobei ein Ende durch eine Öffnung 26 im Schalthebel 8 ragt und dessen anderes Ende sich auf dem hinteren Handgriff 7 abstützt. Es ist außerdem eine Drehfeder 25 vorgesehen, die das Sperrglied 9 in die in Fig. 2 und 3 gezeigte Sperrstellung bewegt, so daß eine Betätigung des Schalthebels 8 ausschließlich dann erfolgen kann, wenn zuvor das Sperrglied 9 entgegen der Vorspannkraft der Drehfeder 25 verschwenkt wird und somit den Betätigungsweg für den Schalthebel 8 freigibt.

Da der Mikroschalter 16 zur Betätigung der Schaltkontakte lediglich einen geringen Schaltweg ausführen muß, sind das Übertragungsglied 21 und der Hebel 18 entkoppelbar. Somit liegen die jeweiligen Enden 21* und 18' lediglich in Öffnungsrichtung der Schaltkontakte des Mikroschalters 16 in kraftschlüssiger Verbindung und in der Gegenrichtung wird der Hebel 18 ausschließlich von der Schaltfeder 19 betätigt. Bei entriegelter Sperre und Krafteinwirkung gemäß dem Pfeil K in Fig. 3 wird das Ende 21* des Übertragungsgliedes 21 nach unten bewegt, wodurch die Feder 23 gespannt wird. Dieser nach unten gerichteten Bewegung folgt das Ende 18' des Hebels 18, und zwar aufgrund der Schaltfeder 19, die an einem an dem Hebel 18 angeformten Bügel 27 angreift. Da zur Betätigung der Kontakte im Mikroschalter 16 lediglich ein geringer Weg des Stößels 17 erforderlich ist, wird die Schwenkbewegung des Hebels 18 entsprechend begrenzt. Damit folgt das freie Ende 18' der Abwärtsbewegung des freien Endes 21* des Übertragungsgliedes 21 nur über einen vorbestimmten Betätigungsweg, bei darüber hinausgehender Abwärtsbewegung des Endes 21* werden das Übertragungsglied 21 und der Hebel 18 entkoppelt. Auf diese Weise wird eine übermäßige Krafteinwirkung auf den Mikroschalter 16 vermieden.

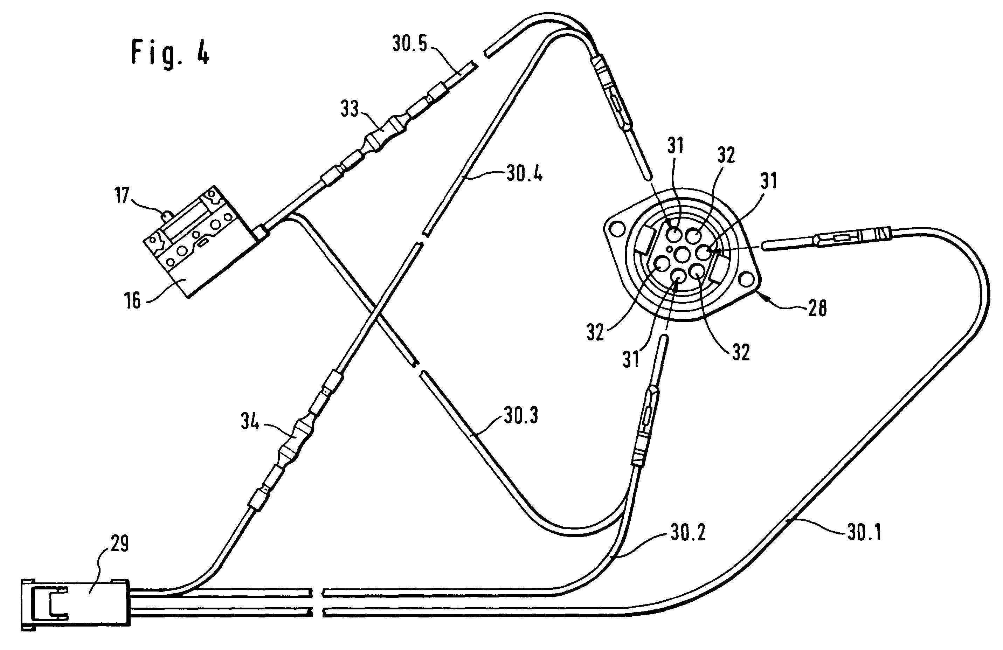

Die Fig. 4 zeigt einen Gerätestecker 28 der Stecker/Kupplungs-Verbindung 13 in Fig. 1 bis 3. Daraus ist ersichtlich, daß es sich um einen siebenpoligen Stecker handelt, wobei drei Anschlüsse 31 für die zu dem Mikroschalter 16 sowie einem Temperatursensor 29 führenden Leitungen 30.1 bis 30.5 vorgesehen sind. Drei weitere Anschlüsse 32 sind für die drei Phasen des als Dreiphasensynchronmotors ausgebildeten Antriebsmotors vorgesehen. Wie Fig. 4 außerdem zeigt, ist in der Leitung 30.5 ein Widerstand 33 und in der Leitung 30.4 ein Widerstand 34 angeordnet. Diese Widerstände 33 und 34 sind Bestandteil einer Sicherheitsschaltung, durch die beispielsweise ein Kabelbruch oder ein Kurzschluß feststellbar sein soll.

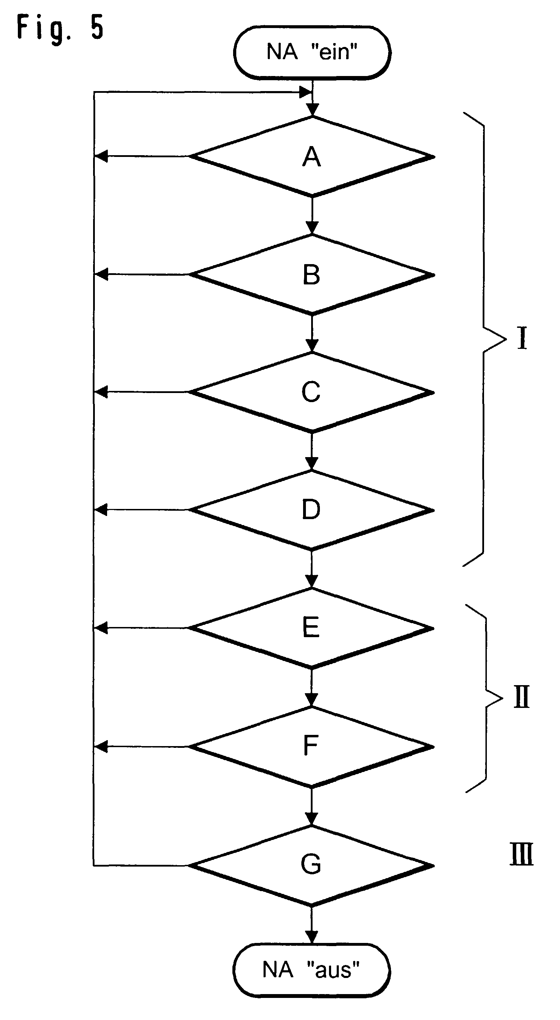

In Fig. 5 ist ein Flußdiagramm gezeigt für ein Beispiel mehrerer Sicherheitschecks, die zum Teil vor der Inbetriebnahme und teilweise während des Betriebs des handgeführten Werkzeugs durchgeführt werden. Zunächst muß die Elektronik an eine Energiequelle angeschlossen werden, beispielsweise an ein Wechselstrom- oder Drehstromnetz. Dies ist in Fig. 5 mit NA "ein" angegeben. Sodann folgen zunächst die Checks für die Bereitstellung, die von der Klammer I in Fig. 5 umfaßt sind.

In der Stufe A wird festgestellt, ob die Ausgänge abgeschaltet sind, anderenfalls wird das Abschalten der Ausgänge abgewartet. Es erfolgt eine Bestätigung, wenn die entsprechenden Bedingungen vorliegen. Sofern die Bedingungen nicht erfüllt sind, wird dieser erste Schritt zur Bereitstellung wiederholt.

In der Stufe B wird festgestellt, ob die Temperatur des Antriebsmotors in einem vorgegebenen Temperaturbereich liegt. Hierzu ist ein Temperatursensor vorgesehen, der zumindest über den Temperaturbereich zwischen -50°C und +120°C ein entsprechendes Signal abgibt. Liegt die gemessene Temperatur außerhalb dieses Bereichs, so wird noch einmal mit der Stufe A begonnen.

Liegt das Signal des Temperatursensors in dem vorgegebenen Bereich, so erfolgt anschließend in der Stufe C eine Kalibrierung. Hierzu werden Kalibrierwerte eingelesen, und es erfolgt eine Überprüfung des Zeitverhaltens des Filters bezüglich Start-Stop: 5 ms/10 ms.

Sofern ein entsprechendes Bestätigungssignal der Stufe C abgegeben wird, werden in der Stufe D mehrere Checks durchgeführt. Die Spannung wird allmählich aufgebaut, so daß zunächst abgewartet werden muß, bis die Nennspannung von 220-380 V erreicht ist bei einem Spannungsanstieg Von <15 V pro Sekunde. Der Schalthebel für den Mikroschalter muß losgelassen sein, anderenfalls ist abzuwarten, bis der Schalthebel losgelassen wird. Es erfolgt eine Kalibrierung der Strommessung. Es wird überprüft, ob der Schalthebel losgelassen ist, wobei ein negatives Ergebnis dazu führt, daß der Schritt Abwarten des Loslassens des Schalthebels wiederholt wird. Bei einem positiven Ergebnis wird eine entsprechende Zeitmessung vorgenommen, nämlich daß der Schalthebel 0,5 s losgelassen ist. Schließlich wird noch die Impedanz des Werkzeugs auf den vorgegebenen Wert überprüft.

Sind alle Überprüfungen der Stufen A bis D positiv durchgeführt, so ist die Bereitstellung erfolgreich; es schließt sich daran die Startprüfung gemäß II an. Die Startprüfung II umfaßt zunächst die Stufe E, in der eine Überprüfung der Bereitschaft des Antriebsmotors erfolgt. Sofern dieses Signal länger als 0,5 s ansteht, ist diese Überprüfung in Ordnung; anderenfalls wird nochmals die Impedanz des Antriebsmotors gemäß Stufe D überprüft. Bei positivem Check der Bereitschaft des Antriebsmotors ist nun der Schalthebel für den Mikroschalter zu betätigen. Es wird überprüft, ob der Schalthebel gedrückt ist und ob das Werkzeug mit einer Drehzahl <1500 min⁻¹ läuft. Außerdem erfolgt in der Stufe E ein Senden von Impulsen zu den drei Phasen des Werkzeugs und eine Strommessung. Bei Überschreiten einer zulässigen Differenz ist eine Phase nicht vorhanden, was dazu führt, daß wieder mit dem Beginn der Bereitstellung angefangen wird.

Sind die betreffenden Meßwerte gleich, so liegt ein positives Ergebnis vor, so daß nun die Überprüfungen in der Stufe F folgen. Hierzu gehört zunächst die Synchronisierung des Motors durch die Starkstromversorgung. Dies führt zu einer Beschleunigung des Werkzeugs auf die Nenndrehzahl, wobei nun als weitere Überprüfung die Drehzahl gemessen wird, nämlich ob diese >1500 min⁻¹ beträgt.

Nach der Startprüfung in den Stufen E und F folgt noch die Betriebsüberwachung in der Stufe G. Unter anderem ist es Ziel dieser Betriebsüberwachung III, auch einen kontrollierten Bremsmodus zu gewährleisten. In der Stufe G wird das Loslassen des Schalthebels festgestellt. Liegt ein entsprechendes Signal bezüglich des Loslassens des Schalthebels vor, wird der Bremsmodus eingeschaltet. Dieser vorgegebene Bremsmodus läuft automatisch ab und wird nur dann aufgehoben, wenn der Schalthebel erneut gedrückt wird. Beim Drücken des Schalthebels kehrt das Werkzeug zum Normallauf zurück. Ein Stopstatus wird aktiviert, wenn nach dem Loslassen des Schalthebels eine vorgegebene Zeitdauer erreicht ist, beispielsweise nach 15 s. Ist diese vorgegebene Zeitdauer erreicht, erfolgt ein Trennen von der Energiequelle, beispielsweise dem Netz, was in Fig. 5 mit NA "aus" angegeben ist.

Die vorliegende Erfindung ist hauptsächlich auf netzgespeiste Antriebe gerichtet. Es kommen jedoch auch Antriebe in Betracht, die von netzunabhängigen Energiequellen versorgt werden, so daß die Erfindung handgeführte Werkzeuge mit einem elektrischen Antriebsmotor mit einer Spannung >42 Volt betrifft, unabhängig von der Art der Energiequelle.

## Patentansprüche

1. Handgeführtes Werkzeug mit einem elektrischen Antriebsmotor (15), der mit einer Spannung >42 Volt betreibbar ist, und mit einem an einem Gehäuse (2) des Antriebsmotors (15) angeordneten Handgriff (7) und einem in dem Handgriff (7) gelagerten Betätigungselement, das auf einen elektrischen Schalter wirkt, um den Antriebsmotor (15) mit elektrischer Energie zu versorgen,
dadurch gekennzeichnet, daß eine Leistungselektronik zwischen der Spannungsquelle und dem Antriebsmotor (15) vorgesehen und der Schalter ein Mikroschalter (16) ist, der mit der Leistungselektronik verbunden ist und infolge seiner Betätigung die Ausgangsleistung der Leistungselektronik bestimmt.

2. Werkzeug nach Anspruch 1,
dadurch gekennzeichnet, daß die Leistungselektronik in das Gehäuse (2) des Antriebsmotors (15) integriert ist oder diese in einer separaten Box (10) angeordnet ist und sowohl der Antriebsmotor (15) als auch der Mikroschalter (16) über ein mehradriges Kabel (11) mit der Box (10) verbunden sind.

3. Werkzeug nach Anspruch 2,
dadurch gekennzeichnet, daß am Gehäuse (2) des Antriebsmotors (15) und/oder an der Box (10) eine Stecker/Kupplung-Verbindung (12, 13) vorgesehen ist.

4. Werkzeug nach Anspruch 2 oder 3,
dadurch gekennzeichnet, daß das Verbindungskabel (11) mindestens fünf Leiter, vorzugsweise sieben Leiter umfaßt.

5. Werkzeug nach einem der Ansprüche 1 bis 4,
dadurch gekennzeichnet, daß ein Temperatursensor (29) für den Antriebsmotor (15) vorgesehen ist, der mit der Leistungselektronik und/oder dem Mikroschalter (16) verbunden ist, wobei vorzugsweise der Temperatursensor (29) ein PTC-Element umfaßt.

6. Werkzeug nach einem der Ansprüche 1 bis 5,
dadurch gekennzeichnet, daß in die elektrische Leitung (30.1 bis 30.5) zum Mikroschalter (16) und/oder dem Temperatursensor (29) ein Widerstand (33, 34) geschaltet ist.

7. Werkzeug nach einem der Ansprüche 1 bis 6,
dadurch gekennzeichnet, daß das Betätigungselement ein im Handgriff (7) schwenkbar gelagerter Schalthebel (8) ist, dessen freies Ende über die Kontur des Handgriffs (7) hervorsteht, wobei vorzugsweise der Schalthebel (8) mit einem weiteren Hebel (18) in Wechselwirkung steht, der auf einen Stößel (17) des Mikroschalters (16) wirkt und insbesondere die beiden Hebel (8, 18) in Betätigungsrichtung nach einem vorgegebenen Betätigungsweg entkoppelbar sind.

8. Werkzeug nach Anspruch 7,
dadurch gekennzeichnet, daß zwischen dem von der Bedienungsperson betätigbaren Schalthebel (8) und dem auf den Mikroschalter (16) wirkenden Hebel (18) ein Übertragungsglied (21) angeordnet ist.

9. Werkzeug nach einem der Ansprüche 7 oder 8,
dadurch gekennzeichnet, daß eine Feder (23) vorgesehen ist, die eine Reaktionskraft auf den Schalthebel (8) erzeugt und die an einer Lagerfläche des Gehäuses (7) abgestützt ist.

10. Werkzeug nach einem der Ansprüche 7 bis 9,
dadurch gekennzeichnet, daß an dem auf den Mikroschalter (16) wirkenden Hebel (18) eine Feder (19) angelenkt ist, die den Hebel im Sinne eines Schließens der Schaltkontakte im Mikroschalter (16) belastet.

11. Werkzeug nach einem der Ansprüche 7 bis 10,
dadurch gekennzeichnet, daß ein Sicherungsmechanismus vorgesehen ist, der eine unbeabsichtigte Betätigung des Schalthebels (8) verhindert, wobei vorzugsweise der Sicherungsmechanismus ein federbelastetes Sperrglied (9) umfaßt, das an dem Schalthebel (8) schwenkbar gelagert ist und das Sperrglied (9) auf einer im Schalthebel (8) angeordneten Schwenkachse (24) gelagert und von einer Drehfeder (25) selbsttätig rückstellbar ist.

12. Werkzeug nach einem der Ansprüche 1 bis 11,
dadurch gekennzeichnet, daß der Antriebsmotor (15) eine Nennleistung von ca. 2500 Watt aufweist.

13. Werkzeug nach einem der Ansprüche 1 bis 12,
dadurch gekennzeichnet, daß der Antriebsmotor (15) ein Dreiphasensynchronmotor ist und vorzugsweise die Leistungselektronik einen Frequenzumrichter umfaßt.
